(19) **Europäisches Patentamt / European Patent Office / Office européen des brevets**

(11) **EP 4 651 445 A1**

(12) **EUROPEAN PATENT APPLICATION**
published in accordance with Art. 153(4) EPC

(43) Date of publication:
**19.11.2025 Bulletin 2025/47**

(21) Application number: **24755478.5**

(22) Date of filing: **28.03.2024**

(51) International Patent Classification (IPC):
**H04L 12/18** (2006.01)   **H04L 45/16** (2022.01)
**H04L 49/201** (2022.01)

(52) Cooperative Patent Classification (CPC):
**H04L 12/1868; H04L 12/1854; H04L 45/16;
H04L 49/201**

(86) International application number:
**PCT/CN2024/084592**

(87) International publication number:
**WO 2025/199904 (02.10.2025 Gazette 2025/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **New H3C Technologies Co., Ltd.**
**Hangzhou, Zhejiang 310052 (CN)**

(72) Inventors:
• **CHEN, Jingsheng**
  **Beijing 100102 (CN)**
• **LEI, Juyan**
  **Beijing 100102 (CN)**

(74) Representative: **2SPL Patentanwälte PartG mbB**
**Landaubogen 3**
**81373 München (DE)**

(54) **RDMA-BASED MULTICAST METHOD AND NODE DEVICE FOR DISTRIBUTED COLLECTIVE COMMUNICATION**

(57) Multicast methods based on RDMA and corresponding node devices are disclosed, which are suitable for distributed collective communication involving a sender and N receivers. According to an example of the methods, the sender sends a multicast packet based on a QP with a first UD type, where the multicast packet carries a first virtual endpoint ID and a first multicast group ID; and each receiver may send a unicast packet to the sender based on a QP with a second UD type, where the unicast packet carries a second virtual endpoint ID and a second multicast group ID. The first multicast group ID of the sender is the same as second multicast group IDs of the N receivers, and the first virtual endpoint ID of the sender and second virtual endpoint IDs of the N receivers are different from each other. In this way, the multicast packet from the sender may be forwarded to all the receivers by using a multicast function of a network switch, and each receiver may reply to the sender with the unicast packet, so as to improve the reliability of distributed collective communication.

FIG. 8

**Description**

**TECHNICAL FIELD**

The present disclosure relates to distributed collective communication, and in particular, to multicast solutions suitable for distributed collective communication implemented based on Remote Direct Memory Access (RDMA).

**BACKGROUND**

At present, with the deep integration of Artificial Intelligence Generated Content (AIGC) and various industries, the number of parameters of large models continues to grow, and the scale of computing tasks is increasingly large and complex. Therefore, a distributed training system will bear large-scale computing power requirements and tasks, and the communication efficiency of distributed training will seriously affect the performance of distributed training.

On the other hand, RDMA, as a current mainstream high performance transmission mode, has been applied on a large scale in communication of the distributed training system. For example, when an Artificial Intelligence (AI) or High Performance Computing (HPC) application performs distributed collective communication such as allreduce and allgather, such efficient communication mode, RDMA, is usually used. However, collective communication in a distributed system implements communication such as multiple-to-multiple and one-to-multiple communication substantially based on point-to-point unicast communication of a transport layer. Specifically, an application layer calling one-time collective communication is completed by multiple-time point-to-point communication of the transport layer. This is because, in distributed training, when communication is initialized, the establishment of point-to-point connection starts from the transport layer, and subsequent collective communication is performed based on the point-to-point connection of the transport layer. This distributed collective communication mode implemented by point-to-point unicast communication based on RDMA may cause more system overheads, and further lead to a waste of bandwidth resources.

**SUMMARY**

The present disclosure provides multicast solutions suitable for distributed collective communication implemented based on RDMA, which can provide more powerful support for multi-computing power cooperation in a large-scale data center.

In a first aspect, the present disclosure provides a multicast method based on RDMA. The method is applied to a sender in distributed collective communication, and includes: sending, based on a QP with a first UD type, a multicast packet, where the multicast packet carries a first virtual endpoint ID and a first multicast group ID, such that the multicast packet is forwarded to $N$ receivers in the distributed collective communication through a multicast function of a network switch, $N$ is an integer greater than or equal to 2, and each receiver, after determining that the first multicast group ID carried in the multicast packet is same as a second multicast group ID of the receiver, and based on the first virtual endpoint ID, identifying that the multicast packet is from the sender, processes the multicast packet; and when a unicast packet from the receiver is received based on a QP with a second UD type, after determining that the second multicast group ID carried in the unicast packet is the same as the first multicast group ID, and that the unicast packet is identified, based on a second virtual endpoint ID carried in the unicast packet, as being sent from the receiver, processing the unicast packet.

In a second aspect, the present disclosure provides a multicast method based on RDMA. The method is applied to one of N receivers in distributed collective communication, where N is an integer greater than or equal to 2, and includes: receiving, based on a QP with a first UD type, a multicast packet, where the multicast packet carries a first virtual endpoint ID of a sender and a first multicast group ID in the distributed collective communication; after determining that the first multicast group ID carried in the multicast packet is same as a second multicast group ID of the receiver, and identifying, based on the first virtual endpoint ID, that the multicast packet is from the sender, processing the multicast packet; and sending, based on a QP with a second UD type, a unicast packet to the sender when a processing result of the multicast packet is to be replied to the sender, where the unicast packet carries a second virtual endpoint ID and the second multicast group ID, such that the sender, after determining that the second multicast group ID carried in the unicast packet is same as the first multicast group ID, and based on the second virtual endpoint ID, identifying that the unicast packet is from the receiver, processes the unicast packet.

In a third aspect, the present disclosure provides a node device for distributed collective communication. The node device serves as a sender in the distributed collective communication, and includes a processor and a network card supporting RDMA, where the processor is configured to: send, based on a QP with a first UD type, a multicast packet through the network card, where the multicast packet carries a first virtual endpoint ID and a first multicast group ID, such that the multicast packet is forwarded to N receivers in the distributed collective communication through a multicast function of a network switch, N is an integer greater than or equal to 2, and each receiver, after determining that the first multicast group ID carried in the multicast packet is same as a second multicast group ID of the receiver, and based on the first virtual endpoint ID, identifying that the multicast packet is from the sender, processes the multicast packet; and when a unicast packet from the receiver is received through the network card based on a QP with a second UD type, after determining that a second multicast group ID carried in the unicast packet is same as the first multicast group ID, and that the unicast packet is identified, based on a second virtual endpoint ID carried in the unicast packet, as being sent from the receiver, process the unicast packet.

In a fourth aspect, the present disclosure provides a node device for distributed collective communication. The node device serves as one of N receivers in the distributed collective communication, and includes a processor and a network card supporting RDMA, where the processor is configured to: receive, based on a QP with a first UD type, a multicast packet through the network card, where the multicast packet carries a first virtual endpoint ID of a sender and a first multicast group ID in the distributed collective communication; after determining that the first multicast group ID carried in the multicast packet is same as a second multicast group ID of the receiver, and identifying, based on the first virtual endpoint ID, that the multicast packet is from the sender, process the multicast packet; and send, based on a QP with a second UD type, a unicast packet to the sender through the network card when a processing result of the multicast packet is to be replied to the sender, where the unicast packet carries a second virtual endpoint ID and the second multicast group ID, such that the sender, after determining that the second multicast group ID carried in the unicast packet is same as the first multicast group ID, and based on the second virtual endpoint ID, identifying that the unicast packet is from the receiver, processes the unicast packet.

At least one technical solution adopted by the present disclosure can achieve the following beneficial effects:

By creating a QP with a first UD type and a QP with a second UD type that support RDMA respectively on a sender and all receivers in distributed collective communication, on one hand, the sender can send a multicast packet to network layers of multiple receivers by using a multicast function of a network switch based on the QP with the first UD type, and compared with conventional point-to-point communication based on RDMA, repeated sending of the same data is avoided, which not only saves bandwidth resources from the sender to the network switch, but also effectively reduces transmission latency; on the other hand, each receiver can send a unicast packet to the sender based on the QP with the second UD type, including feeding back packet receiving conditions to the sender, which can effectively improve the reliability of distributed collective communication.

Particularly, before the sender and all the receivers enter a data multicast process of distributed collective communication, the sender notifies of data information on to-be-transmitted data in a multicast manner based on the QP with the first UD type, and each receiver replies with notification acknowledgement information in a unicast manner based on the QP with the second UD type, such that the sender and all the receivers can update and maintain their respective data packet transceiving records in real time in the data multicast process, and the sender, after a multicast process for a specific data block is ended, can confirm whether all the receivers correctly receive the sent data packets based on packet sending state record of the sender and packet receiving state records fed back by each receiver, and trigger retransmission of data packets that are not correctly received by all the receivers as appropriate. In this way, compared with a manner in which a receiving side replies with packet receiving acknowledgement in real time, not only a number of packets received with acknowledgement can be significantly reduced, but also a waiting duration caused by feeding back packet loss information in real time is avoided, which effectively improves the efficiency of distributed collective communication.

**BRIEF DESCRIPTION OF DRAWINGS**

The drawings described herein are used to provide further understanding of the present disclosure, and constitute a part of the present disclosure. The exemplary embodiments of the present disclosure and the description thereof are used to explain the present disclosure, and do not constitute an improper limitation on the present disclosure.

FIG. 1 is a schematic diagram showing a manner for implementing one-to-multiple multicast in distributed collective communication according to embodiments of the present disclosure.
FIG. 2 is a schematic diagram showing another manner for implementing one-to-multiple multicast in distributed collective communication according to embodiments of the present disclosure.
FIG. 3A and FIG. 3B are schematic diagrams showing a node architecture of performing distributed training based on RDMA by using a Unified Communication X (UCX) according to embodiments of the present disclosure.
FIG. 4 is a schematic diagram showing another manner for implementing one-to-multiple multicast in distributed collective communication according to embodiments of the present disclosure.
FIG. 5A is a schematic flowchart showing a method for establishing multicast connection based on RDMA suitable for distributed collective communication according to embodiments of the present disclosure.
FIG. 5B and FIG. 5B (continued) are schematic flowcharts showing a multicast method based on RDMA suitable for distributed collective communication according to embodiments of the present disclosure.
FIG. 6 is a schematic diagram showing a packet sending state record of a sender established according to embodiments of the present disclosure.

FIG. 7 is a schematic diagram showing a packet receiving state record of a receiver established according to embodiments of the present disclosure.

FIG. 8 is a schematic flowchart showing a multicast method based on RDMA according to embodiments of the present disclosure, which is applied to a sender in distributed collective communication.

FIG. 9 is a schematic flowchart showing a multicast method based on RDMA according to embodiments of the present disclosure, which is applied to one of N receivers in distributed collective communication.

FIG. 10 is a functional module diagram showing a node device for distributed collective communication according to embodiments of the present disclosure.

**DETAILED DESCRIPTION**

In order to make the objectives, technical solutions and advantages of the present disclosure clearer, the technical solutions of the present disclosure will be clearly and completely described below with reference to specific embodiments of the present disclosure and corresponding drawings. The described embodiments are only some but not all embodiments of the present disclosure. Based on the embodiments in the present disclosure, all other embodiments obtained by those skilled in the art without creative efforts fall within the protection scope of the present disclosure.

The technical solutions provided in the embodiments of the present disclosure are described in detail below with reference to the accompanying drawings.

In a current distributed system, in addition to point-to-point communication, collective communication is mostly the cases of one-to-multiple and multiple-to-multiple communication. Since some current mainstream transport layer protocols support only a point-to-point transmission mode, one-to-multiple data transmission and multiple-to-multiple data transmission in the collective communication are mostly implemented based on the point-to-point data transmission mode, that is, one-to-multiple data forwarding and multiple-to-multiple data forwarding are completed by calling point-to-point transmission multiple times.

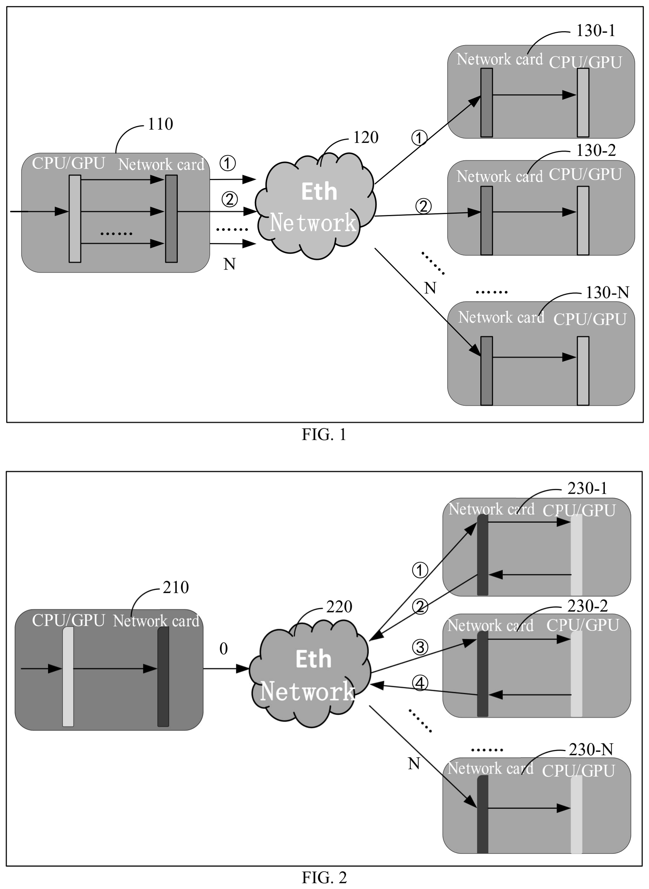

Taking one-to-multiple broadcast (one data sender and multiple data receivers) as an example, data on one node needs to be broadcasted to other multiple nodes in a cluster. At present, a manner for implementing one-to-multiple broadcast may be shown in FIG. 1, where a source node (hereinafter also referred to as a sender) 110 sequentially forwards same packets to different target nodes (hereinafter also referred to as receivers) 130-1, 130-2, ... 130-N through a network switch 120. Although N shown in the figure is greater than 2, those skilled in the art should understand that N may be equal to 2. In other words, N represents a number of the target nodes, and as long as N is an integer greater than or equal to 2, the so-called one-to-multiple broadcast can be implemented. If a data amount is $M$, a bandwidth is $B$, and $n$ is a number of nodes, a total consumed time for implementing the one-to-multiple broadcast in this manner may be calculated as follows:

$$T_{Bcast} = (n-1)*\left(t_s + \frac{M}{B}\right) = (n-1)*\frac{M}{B} + (n-1)*t_s,$$

where $t_s$ represents a start time for starting single transmission, including a total consumed time for network layer protocol stack processing, CPU interrupt application layer protocol stack processing, and data forwarding to a network interface.

Obviously, in this manner, additional overheads linearly related to a communication scale are introduced, causing an increase in latency. In addition, when a bandwidth from the sender 110 to the network switch 120 is larger, this manner easily causes a waste of bandwidth resources; and when a data amount of distributed training is larger, this manner easily causes formation of a bandwidth bottleneck link.

At present, another mainstream manner for implementing one-to-multiple broadcast in distributed collective communication may be shown in FIG. 2. During communication between a source node 210 and multiple target nodes 230-1, 230-2, ... 230-N, intermediate data is forwarded by using the target nodes 230-1, 230-2, ··· 230-N-1 as assistance. Specifically, the sender 210 divides a to-be-sent packet into multiple data blocks, and sends one data block each time, and the first target node 230-1, after receiving the complete data block, forwards the data block to the next target node 230-2. By analogy, the data block is sequentially forwarded to the last target node 230-N. Because the sender 210, during the transfer of the data block between the target nodes 230-1, 230-2, ... 230-N, may send a next data block to the first target node, this manner can implement pipelined parallel sending of data blocks, effectively improving the communication efficiency between nodes in the distributed system.

In some embodiments, if a data amount is $M$, a bandwidth is $B$, and $n$ is a number of nodes, where the sender divides the data amount $M$ into $s$ blocks, a total consumed time for implementing the one-to-multiple broadcast in this manner may be calculated as follows:

$$T_{Bcast} = \frac{(s+n-2)M}{s * B} + (s + n - 2) * t_s$$
$$= \frac{(s+n-2)}{s} * \frac{M}{B} + (s + n - 2) * t_s,$$

where $t_s$ represents a start time for starting single transmission, including a total consumed time for network layer protocol stack processing, CPU interrupt application layer protocol stack processing, and data forwarding to a network interface.

Although the implementation manner improves communication efficiency to some extent and reduces a bandwidth bottleneck, there are still additional overheads linearly related to a communication scale. In addition, the target nodes 230-1, 230-2, ... 230-N-1 that assist in forwarding intermediate data, after receiving a packet, need to duplicate and send the packet, which increases additional latency of CPU interruption and processing thereon.

In view of this, the present invention is intended to provide a multicast method based on RDMA suitable for distributed collective communication, in which, duplication and distribution of a multicast packet are completed by using a network switch, and repeated sending of same data is avoided by replacing application layer multicast with network layer multicast, such that a bandwidth from a sender to a network switching node can be effectively saved, and because a processing time of assisting in forwarding intermediate data is reduced, transmission latency can be effectively reduced.

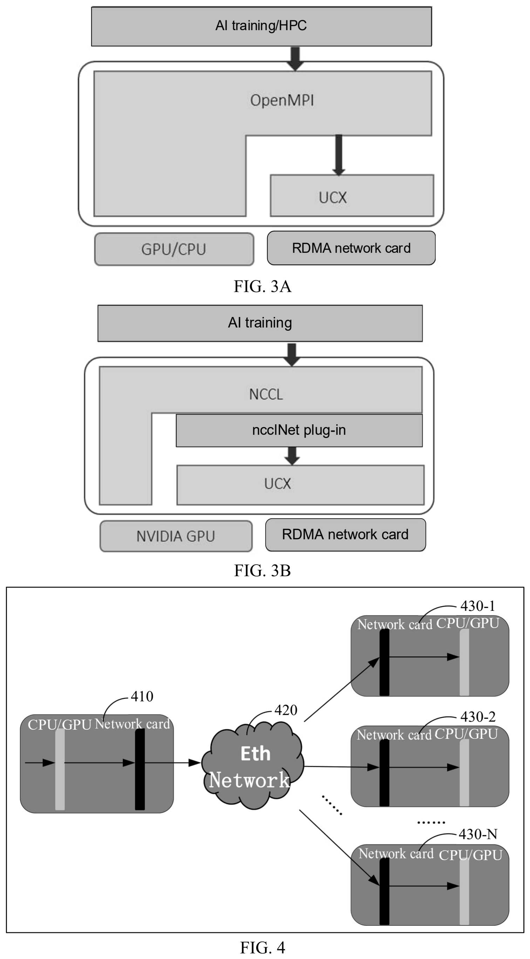

Unified Communication X (UCX) is intended to provide a unified abstract communication interface to optimize communication based on RDMA and support requirements of various applications. In collective communication of the current distributed system, in order to optimize data transmission based on RDMA, most communications libraries (such as NVIDIA Collective Communications Library (NCCL) and Open Message Passing Interface (OpenMPI)) have been compatible with UCX, as shown in FIG. 3A and FIG. 3B. UCX performs communication between nodes based on endpoints, that is, a sender, when using UCX, needs to create an endpoint, and the endpoint of the sender is connected to endpoints created by receivers. Moreover, each endpoint is uniquely identified with a corresponding endpoint ID. In addition, in an AI or HPC application, for example, when AI distributed training is performed, a plurality of processes are usually started, and a communications library such as NCCL or OMPI assigns a ranking value *rank* to each process to uniquely identify the corresponding process.

Therefore, the present disclosure implements network layer multicast suitable for distributed collective communication mainly based on UCX and RDMA (hereinafter also referred to as network RDMA multicast), so as to implement the distributed collective communication by using a multicast function of a network switch. In some embodiments, when, in a distributed training process of a sender, broadcast communication primitives need to be called to broadcast data, multicast connection may be established based on underlying UCX (hereinafter also referred to as performing multicast connection establishment), and then a multicast data packet is sent by using the established multicast connection, such that the multicast data packet is forwarded to all receivers by using the multicast function of the network switch. Correspondingly, the receivers, when receiving the multicast data packet, may reply to the sender with ACK/NACK. In this way, if packet loss occurs, the sender performs retransmission, effectively ensuring multicast reliability.

A framework of network RDMA multicast communication may be shown in FIG. 4. Multicast connection based on RDMA is established between a sender 410 and multiple receivers 430-1, 430-2, ... 430-N by using UCX, such that multicast based on RDMA suitable for distributed collective communication can be implemented by using a multicast function of a network switch 420.

If a data amount is *M,* a Maximum Transmission Unit (MTU) is *U,* a bandwidth is *B,* and *n* is a number of nodes, a consumed time for implementing the one-to-multiple broadcast in this solution may be calculated as follows:

$$T_{Bcast} = \frac{M}{B} + \frac{M}{U} * (t_s + T_0),$$

where $T_0$ indicates additional latency caused by multicast sending data once, and some header information needs to be additionally added to a payload of data in the multicast, such that some latency is additionally introduced in data parsing and encapsulation, as compared with the above two manners; $t_s$ represents a start time for starting single transmission, including a total consumed time for network layer protocol stack processing, CPU interrupt application layer protocol stack processing, and data forwarding to a network interface.

Because UCX is based on a point-to-point communication framework, in order to implement a reliable network RDMA multicast solution, according to an embodiment of the present disclosure, the UCX communication framework is first modified to implement one-to-multiple multicast connection establishment.

1. Multicast connection establishment suitable for distributed collective communication based on UCX

Firstly, a source node and target nodes participating in distributed collective communication need to establish multicast connection based on RDMA (for example, RDMA conforming to an RoCEV2 protocol).

In some embodiments, because a Queue Pair (QP) with an Unreliable Datagram (UD) type of RDMA cannot ensure that receivers receive a data packet, or cannot ensure a receiving sequence of the data packet, in order to implement reliable multicast connection suitable for distributed collective communication based on RDMA, in the technical solutions according to the embodiments of the present disclosure, QPs with two UD types are created at each of a sender and all receivers, where a QP with a first UD type is configured to establish multicast connection between the sender and all the receivers, that is, the sender and all the receivers are constructed as one multicast group, such that a multicast packet from the sender can be forwarded to each receiver by using a multicast function of a network switch, so as to implement distributed collective communication; and a QP with a second UD type is configured to establish unicast mapping (hereinafter also referred to as a virtual unicast link) between the sender and each receiver, such that each receiver can send a unicast packet to the sender, including replying with an ACK/NACK packet, which can effectively ensure the reliability of distributed collective communication.

Secondly, the point-to-point communication framework of UCX needs to be modified, that is, the unicast link is extended by breaking through the limitation of the point-to-point communication framework of UCX, so as to implement a point-to-multipoint connection establishment solution based on UCX, ensuring that the receivers can correctly identify the multicast data packet from the sender, and the receivers can reliably unicast reply to the sender with ACK/NACK.

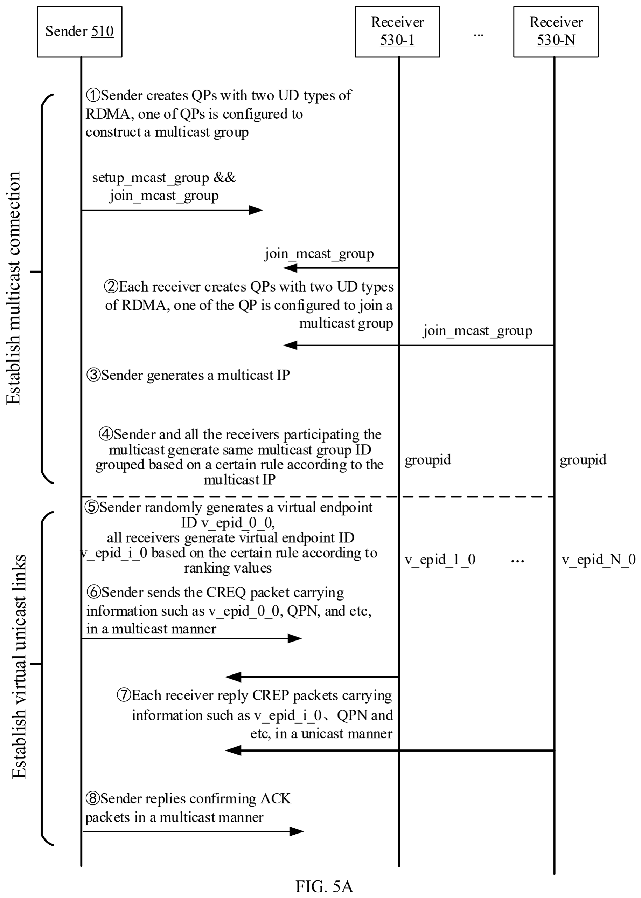

The connection establishment solution may be shown in FIG. 5A. As shown in FIG. 5A, the connection establishment solution may be generally divided into two stages: establishing multicast connection and establishing a virtual unicast link.

As shown in a part above a dotted line in FIG. 5A, the stage of establishing the multicast connection may include steps ① to ④.

① A sender 510 creates QPs with two UD types, and ② receivers 530-1, ..., 530-N each create QPs with two UD types, where a QP with a first UD type is configured to construct and join a multicast group, and a QP with a second UD type is configured to establish a virtual unicast link.

It should be noted that, although FIG. 5A shows that step ① is performed before step ②, in fact, an execution sequence of the two steps is not limited, that is, step ① and step ② may be performed simultaneously or step ① may be performed after step ②.

③ The sender 510 generates a unique multicast Internet Protocol (IP) address.

Correspondingly, all the receivers 530-1, ..., 530-N may acquire the multicast IP address through an original point-to-point transmission solution in distributed collective communication.

④ The sender 510 and all the receivers 530-1, ..., 530-N generate same 3-byte multicast group IDs (groupid) based on a same rule according to the multicast IP address, which are configured to identify a multicast group to which the sender and the receivers belong, that is, to identify a multicast group created by the sender and all the receivers by using the QP with the first UD type.

In this regard, multicast connection is successfully established between the sender 510 and all the receivers 530-1, ..., 530-N. In some embodiments, if a multicast group ID (groupid) is carried when the sender 510 sends a multicast data packet, the receivers 530-1, ..., 530-N, after receiving the multicast data packet, may correctly identify and process the multicast data packet by matching multicast group IDs (groupid) stored in the receivers with the multicast group ID (groupid) carried in the multicast data packet. The multicast group IDs (groupid) meet the condition that a highest bit is 1 (such as 0x800001).

In addition, as shown in a part below the dotted line in FIG. 5A, the stage of establishing the virtual unicast link may include step ⑤ to step ⑧.

⑤ The sender 510 randomly generates a 3-byte virtual endpoint ID v_epid_0_0, and all the receivers generate different 3-byte virtual endpoint IDs v_epid_1_0, ..., v_epid_N_0 based on a certain rule according to ranking values *rank* to which the receivers belong, which are configured to identify packets received and sent by each node. As previously described, UCX performs communication between nodes based on endpoints, and corresponding endpoints are uniquely identified by using endpoint IDs. In the embodiments of the present disclosure, in order to implement point-to-multipoint multicast connection establishment based on UCX, a virtual endpoint ID is extended based on an endpoint ID of UCX, and is mainly configured to identify each node for receiving and sending packets. A virtual endpoint ID v_epid_0_0 generated by the sender 510 and virtual endpoint IDs v_epid_1_0, ..., v_epid_N_0 generated by the receivers meet the condition that a highest bit is 0 (such as 0x000001).

⑥ The sender 510 initiates a connection request, that is, generates a CREQ (connection request) packet, and sends the CREQ packet in a multicast manner. The CREQ packet carries information such as the virtual endpoint ID v_epid_0_0 of the sender, a multicast group ID, and a Qualified Provider Network (QPN).

⑦ All the receivers 530-1, ..., 530-N, after receiving the CREQ packet from the sender 510, reply to the sender with connection request responses, i.e., CREP (connection request response) packets, in a unicast manner. The CREP packets carry information such as the virtual endpoint IDs v_epid_1_0, ..., v_epid_N_0 generated by the receivers, multicast group IDs, and QPNs, and the CREP packets carry acknowledgement (ACK) flag bits, so as to ensure that the sender 510, after receiving the CREP packets, can reply to the corresponding receivers with ACK packets.

⑧ The sender 510, after successively receiving the CREP packets from the receivers 530-1, ..., 530-N, stores the information carried in these CREP packets. It should be noted that a sequence of the sender 510 receiving the CREP packets from the receivers 530-1, ···, 530-N is uncertain, and is not necessarily the same as a sequence of the receivers 530-1, ..., 530-N receiving the CREQ packet from the sender 510. Therefore, the sender 510 counts the received CREP packets until the sender 510 receives the CREP packets carrying ACK information replied by all the receivers 530-1, ..., 530-N. In addition, the sender 510, after confirming that the CREP packets carrying the ACK information replied by all the receivers 530-1, ···, 530-N have been received, may reply to all the receivers 530-1, ..., 530-N with an ACK packet in a multicast manner according to the ACK information in the received CREP packets.

In some embodiments, if the received CREP packets carry NACK information instead of ACK information, the sender 510 resends the CREQ packet in a multicast manner. In this case, the receivers that have previously replied with the CREP packets carrying the ACK information will ignore the repeatedly received CREQ packet, and the receivers that have previously replied with the CREP packets carrying the NACK information will process the repeatedly received CREQ packet, and after the processing is correct, reply to the sender 510 with the CREP packets carrying the ACK information.

Through the above processing, virtual unicast links for the receivers 530-1, ..., 530-N unicast replying to the sender 510 with packets (which may carry the ACK/NACK information for packet receiving acknowledgement and/or packet loss report) are successfully established, specifically including unicast mappings {v_epid_0_0, v_epid_1_0}, ..., {v_epid_0_0, v_epid_N_0} established based on the virtual endpoint IDs.

Therefore, the sender may send a multicast packet to multiple receivers based on the QP with the first UD type, and each receiver may send a unicast packet to the sender based on the QP with the second UD type. The multicast packet carries a virtual endpoint ID (identifier) of the sender and a multicast group ID (identifier), such that the multicast packet can be forwarded to each receiver through a multicast function of a network switch, and each receiver identifies and processes the multicast packet by comparing the multicast group ID carried in the multicast packet with a multicast group ID of the receiver; the unicast packet carries the multicast group ID and a virtual endpoint ID of the receiver, such that the sender can correctly identify and process the unicast packet. In other words, through the above operations, the multicast connection establishment based on UCX is completed.

2. Network RDMA multicast implementation suitable for distributed collective communication

In order to ensure the reliability of network RDMA multicast transmission of distributed collective communication data, a guarantee mechanism needs to be designed. Generally speaking, a receiving side of each data packet may be required to reply with an acknowledgement packet, so as to ensure correct reception of the packet. However, this manner obviously wastes a network bandwidth. At the same time, due to the instability of network, there is a possibility that the acknowledgement packet replied by a receiver is lost, which further causes the correctly received data packet to be re-transmitted. This obviously leads to a waste of network resources, affecting the efficiency of distributed collective communication.

Therefore, according to the embodiments of the present disclosure, a network RDMA multicast manner suitable for distributed collective communication is designed on the basis that the multicast connection suitable for distributed collective communication is established based on UCX in the early stage.

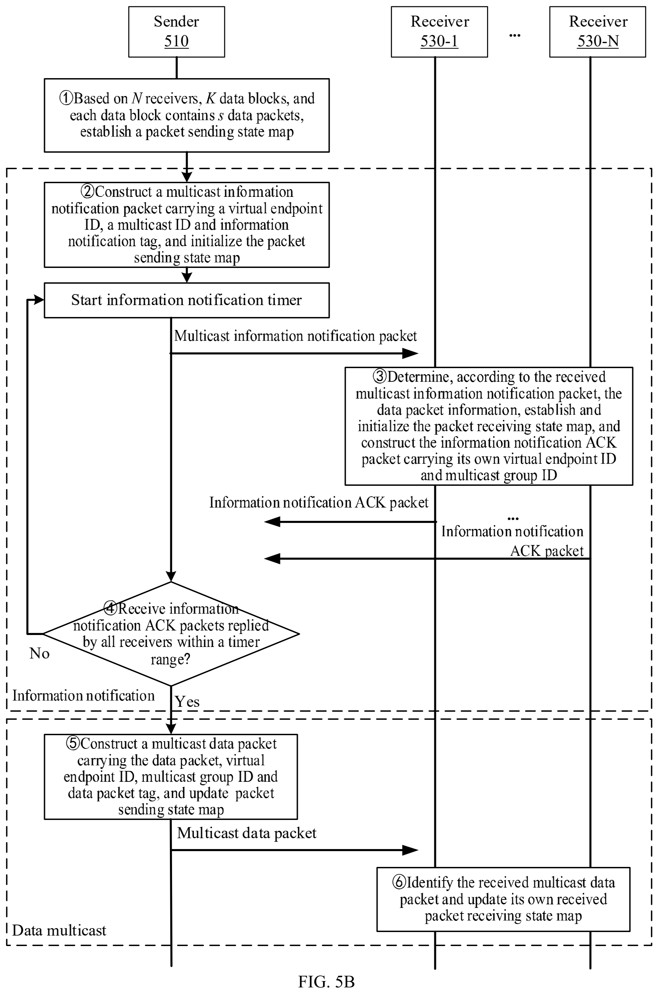

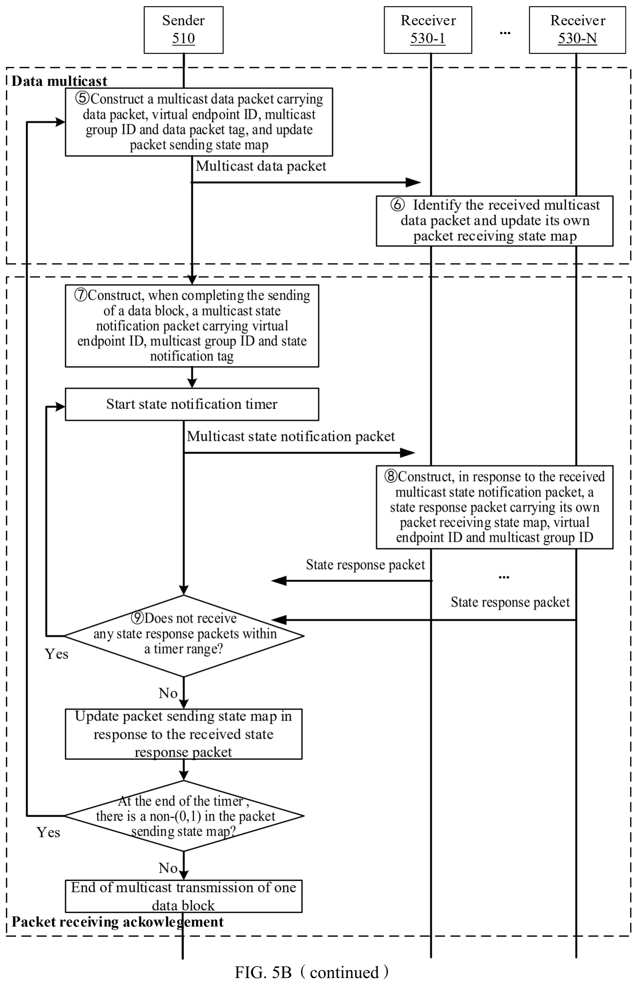

As shown in FIG. 5B and FIG. 5B (continued), a network RDMA multicast method may be generally divided into three stages, namely, information notification, data multicast, and packet receiving acknowledgment. The information notification mainly provides initialization preparation conditions for subsequent two stages, including synchronizing data information on to-be-transmitted data between a sender and all receivers, and establishing corresponding packet sending state record and packet receiving state records; the data multicast is mainly used by the sender to send a data packet included in the to-be-transmitted data in a multicast manner, and the sender and all the receivers update their packet sending state record and packet receiving state records in real time in this process; and the packet receiving acknowledgement is mainly used for confirming data packet receiving conditions based on the corresponding packet sending state record and packet receiving state records after data packet transmission for a specific data block is ended.

As shown in FIG. 5B, the information notification stage may include the following steps ① to ④.

① The sender 510 in distributed collective communication divides to-be-transmitted data into K data blocks in total based on a certain threshold according to a data amount. Due to the unreliability of transmitting data by using a QP with a UD type, MTU (Maximum Transmission Unit) is recommended as the maximum size of a data packet transmitted on a network, in bytes. Therefore, each data block can send data according to a size of MTU, and data packets with a number of $\lceil$ a data amount of the data block/MTU $\rceil$ are sent in total. $\lceil\ \rceil$ represents an up rounding operator, and if $\lceil$ a data amount of the data block/MTU $\rceil$ is equal to s, each data block is further divided into s data packets.

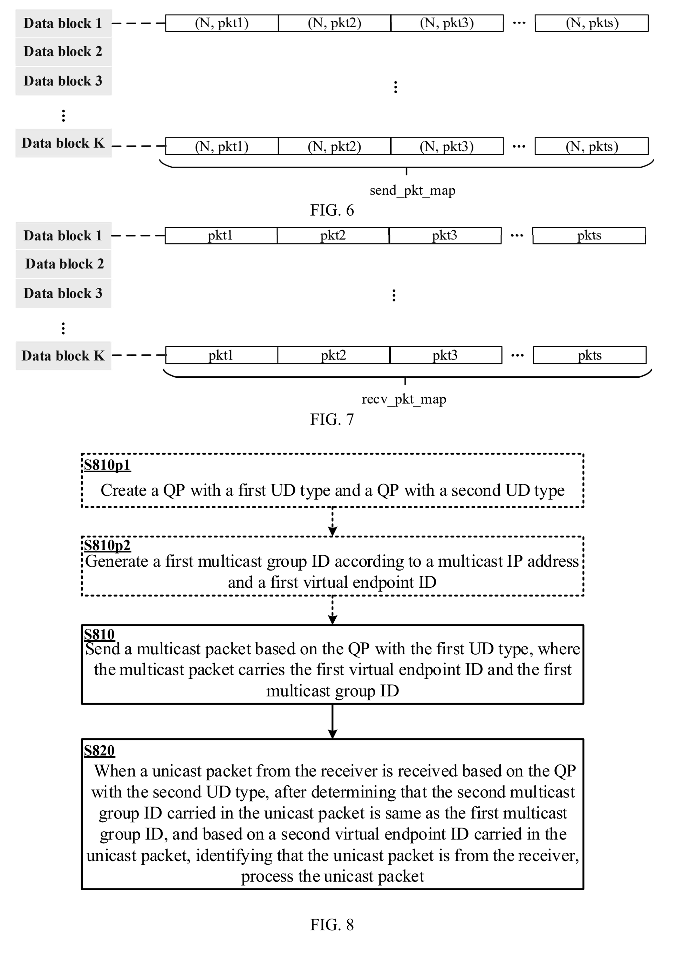

The sender 510 in distributed collective communication establishes a packet sending state record based on a sequence of s data packets according to the number s of data packets included in each data block. The packet sending state record may adopt a packet sending state map send_pkt_map that records a state tag of a data packet at a corresponding position by using a sequence number of the data packet as a position index, as shown in FIG. 6. $N$ represents a number of receivers in the distributed collective communication; and binarized state tags *pkt1, pkt2, ···, pkti, ···, pkts* respectively identify states of $s$ data packets, and may take a value of 0 or 1. For example, if the value of the state tag *pkti* is 0, it is indicated that the $i^{th}$ data packet has not been sent; if the value of the state tag *pkti* is 1, it is indicated that the $i^{th}$ data packet has been sent. $I$ represents a sequence number of a data packet, and is an integer greater than 0 or less than s.

② When a data packet is ready to be sent in a network RDMA multicast manner, the sender 510 first constructs a multicast information notification packet including data information, and a virtual endpoint ID v_epid_0_0 of the sender, a multicast group ID groupid, and an information notification tag *tag0* are carried at a data start position of the multicast information notification packet. The data information may include at least information such as a data amount $M$ of to-be-transmitted data, the to-be-transmitted data being divided into $K$ data blocks, each data block being further divided into s data packets, and a sequence number of each data packet.

Then, the sender 510 sends the multicast information notification packet based on the previously created QP with the first UD type, and starts a first timer. At the same time, the sender 510 initializes the state tags *pkt1, pkt2, ··· pkts* of $s$ data packets in the packet sending state record to be 0. Subsequently, each time the sender 510 sends a data packet with a corresponding sequence number, the corresponding state tag is changed to 1.

③ Each receiver 530-1, ···, 530-N, when receiving the multicast information notification packet from the sender 510, may determine data information that needs to be from the sender 510 in the current multicast group by using the virtual endpoint ID v_epid_0_0, the multicast group ID groupid, and the information notification tag *tag0* carried in the multicast information notification packet, and establish corresponding packet receiving state records. The packet receiving state records may adopt a packet receiving state map recv_pkt_map that records a state tag of a data packet at a corresponding position by using a sequence number of the data packet as a position index, as shown in FIG. 7. The state tags *pkt1, pkt2 ··· pkts* of s data packets in the packet receiving state records are initialized to be 0. In this way, subsequently, each time the receivers receive a data packet with a corresponding sequence number, the corresponding state tag may be changed to 1.

At the same time, each of the receivers 530-1, ..., 530-N unicast replies to the sender 510 with an information notification acknowledgement packet (hereinafter also referred to as an information notification ACK packet) by using the previously created QP with the second UD type, such that the sender can confirm that the multicast information notification packet is correctly received by the receiver. In particular, the information notification ACK packet replied by the receivers 530-1, ···, 530-N carries virtual endpoint IDs v_epid_1_0, ..., v_epid_N_0 of the receivers, and multicast group IDs groupid, such that the sender 510 performs packet receiving acknowledgement.

④ If information notification ACK packets replied by all the receivers 530-1, ..., 530-N are received within a timing range (hereinafter also referred to as a first predetermined duration) of the first timer, the sender 510 starts multicast transmission of a data packet. If information notification ACK packets (including an information notification ACK packet replied by any receiver that are not received) replied by all the receivers are still not received when the timing of the first timer is ended (that is, the first predetermined duration has elapsed since the multicast information notification packet is sent), the sender 510 resends the multicast information notification packet, and restarts the first timer until the sender 510 receives information notification ACK packets replied by all the receivers.

It can be seen that receiving the information notification ACK packets replied by all the receivers 530-1, ..., 530-N is a precondition that the sender 510 starts data multicast transmission. In some embodiments, in order to avoid endless reception wait due to possible loss of an information notification ACK packet, the first timer may be utilized to constrain a wait time. In other words, if the information notification ACK packets replied by all the receivers 530-1, ..., 530-N are still not received when the timing of the first timer is ended, the sender 510 may infer that at least one receiver cannot normally receive the multicast information notification packet and/or an information notification ACK packet replied by at least one receiver is lost, and the sender 510 resends the multicast information notification packet, and at the same time, restarts the first timer.

As shown in FIG. 5B and FIG. 5B (continued), the data multicast process mainly includes the following step ⑤ and step ⑥.

⑤ The sender 510 starts a multicast sending process of a data packet. In some embodiments, the sender 510 constructs a multicast data packet based on a to-be-sent data packet, where a data start position of the multicast data packet carries the virtual endpoint ID v_epid_0_0 of the sender, a multicast group ID groupid, and a data packet tag *tag1*; and the sender 510 sends the multicast data packet by using the previously created QP with the first UD type, so as to ensure that the multicast data packet can be forwarded to the receivers 530-1, ..., 530-N through a multicast function of a network switch.

At the same time, the sender 510 sets a state tag corresponding to the sent data packet in the packet sending state record to be 1.

⑥ Each receiver 530-1, ..., 530-N, when receiving the multicast data packet, may correctly identify the multicast data packet based on the virtual endpoint ID v_epid_0_0, the multicast group ID groupid, and the data packet tag *tag1* carried in the multicast data packet, and set a value of a corresponding position in the packet receiving state records of the receivers 530-1, ..., 530-N according to a sequence number PSN carried in the multicast data packet.

In some embodiments, the receivers 530-1, ..., 530-N sets a state tag at a corresponding position in the packet receiving state records of the receivers 530-1, ..., 530-N to be 1 according to the Packet Sequence number (PSN) carried in the multicast data packet from the sender 510. For example, assuming that PSNs of a plurality of packets sent by the sender 510 sequentially increase from 1 to s, and a sequence number carried in a multicast data packet received by the receivers 530-1, ..., 530-N is i, the receivers 530-1, ..., 530-N will set a value of a state tag $pkt_i$ at corresponding $i^{th}$ position in the packet receiving state records of the receivers 530-1, ..., 530-N to be 1.

The sender 510 and the receivers 530-1, ..., 530-N may respectively repeat the above steps ⑤ and ⑥ until all s data packets of the same data block are multicast sent.

Then, as described below, the sender 510 will start packet receiving acknowledgement for the data block, and after confirming that all the receivers 530-1, ..., 530-N correctly receive all s data packets of the data block, end the multicast transmission process of the data block, and start a multicast transmission process of a next data block. As shown in FIG. 5B (continued), the packet receiving acknowledgement for the data block mainly includes step ⑦ to step ⑨.

⑦ The sender 510, after sending all s data packets of one data block, needs to perform packet receiving acknowledge of the receivers. In this case, the sender 510 constructs a multicast state notification packet, where a data start position of the multicast state notification packet carries the virtual endpoint ID v_epid_0_0 of the sender, a multicast group ID groupid, and a state notification tag *tag2*, and a second timer is started.

⑧ Each receiver 530-1, ..., 530-N, when receiving the multicast state notification packet, constructs a state response packet based on the packet receiving state records of the receivers 530-1, ..., 530-N, and unicast sends the state response packet to the sender 510 by using the previously created QP with the second UD type. In some embodiments, the state response packet carries the virtual endpoint IDs v_epid_1_0, ..., v_epid_N_0 of the receivers, and a multicast group ID groupid, such that the sender 510 performs acknowledgment.

It should be noted that the receivers 530-1, ..., 530-N, when receiving the multicast state notification packet, may not receive a certain data packet of the data block, that is, have not received all s data packets of the data block. In this case, each receiver 530-1, ..., 530-N constructs a state response packet based on current packet receiving state records of the receivers, and unicast sends the state response packet to the sender 510, such that the sender 510 can accurately determine data packet receiving states on the receivers, and correspondingly trigger retransmission of a data packet that has not been received by the receivers.

For example, it is assumed that, a receiver 530-t, when receiving the multicast state notification packet, has received s-1 data packets other than the second data packet in the data block; the remaining N-1 receivers 530-1, ... 530-t-1, 530-t + 1, ..., 530-N, when receiving the multicast state notification packet, have successfully received all s data packets of the data block. In other words, when the multicast state notification packet is received, a value of a state tag $pkt2$ in the packet receiving state record of the receiver 530-t is 0, and values of the remaining s-1 state tags are 1; and values of all s state tags in packet receiving state records of the receivers 530-1, ... 530-t-1, 530-t+1, ⋯, 530-N are 1. In this case, the receivers 530-1, ⋯, 530-t-1, 530-t, 530-t+1, ..., 530-N truthfully feed back data packet receiving state information to the sender 510 through the state response packets, such that, after the sender 510 performs the operations in the following step ⑨, a state tag corresponding to the second data packet in the packet sending state record of the sender 510 is (1, 0), instead of (0, 1) indicating that all receivers correctly receive the data packet. Based on this, the sender 510 will confirm that there is one receiver that does not receive the second data packet, and return to step ⑤ to retransmit the second data packet.

⑨ The sender 510, if not receiving the state response packet replied by any one receiver within a timing range (hereinafter also referred to as a second predetermined duration) of the second timer, retransmits the multicast state notification packet. Otherwise, the sender 510 updates the packet sending state record according to the virtual endpoint IDs v_epid_1_0, ⋯, v_epid_N_0 and the packet receiving state record carried in the received state response packets, including performing AND operation (denoted by an operator "^" below) at a corresponding position on the packet sending state record according to the packet receiving state records in the state response packets.

In some embodiments, within the timing range of the second timer, each time a state response packet replied by one receiver is received, the sender 510 performs the following processing based on each state tag $pkt_i$ in packet receiving state records carried in the state response packet: if a value of $pkt_i$ is 1, (J, $pkt_i$) in the packet sending state record is updated to (J-1, $pkt_i$^1); if a value of $pkt_i$ is 0, (J, $pkt_i$) in the packet sending state record is updated to (J, $pkt_i$^0), where i represents a sequence number of a data packet, and is an integer less than or equal to s and greater than or equal to 1; J is an integer less than or equal to N and greater than or equal to 1, and may be configured to represent a number of receivers that do not receive the $i^{th}$ data packet, that is, N-J may represent counting receivers that correctly receive the $i^{th}$ data packet.

For example, it is assumed that there are 1 sender and 3 receivers (N = 3), and each data block is divided into 5 data packets (s = 5). After the sender 510 sends all 5 data packets in one data block, the packet sending state record is [(3, 1), (3, 1), (3, 1), (3, 1), (3, 1)].

Then, it is assumed that the receiver 530-1 has received the 5 data packets. The packet receiving state record of the receiver 530-1 is [1, 1, 1, 1, 1], and the sender 510, after receiving a state response packet replied by the receiver 530-1, updates the packet sending state record from [(3, 1), (3, 1), (3, 1), (3, 1), (3, 1)] to [(2, 1), (2, 1), (2, 1), (2, 1), (2, 1)] according to the packet receiving state record [1, 1, 1, 1, 1].

It is further assumed that the receiver 530-2 receives 4 data packets other than the second data packet. The packet receiving state record of the receiver 530-2 is [1, 0, 1, 1, 1], and the sender 510, after receiving a state response packet replied by the receiver 530-2, further updates the packet sending state record from [(2, 1), (2, 1), (2, 1), (2, 1), (2, 1)] to [(1, 1), (2, 0), (1, 1), (1, 1), (1, 1)] according to the packet receiving state record [1, 0, 1, 1, 1].

It is further assumed that the receiver 530-3 receives 3 data packets other than the second data packet and the fifth data packet. The packet receiving state record of the receiver 530-3 is [1, 0, 1, 1, 0], and the sender 510, after receiving a state response packet replied by the receiver 530-3, further updates the packet sending state record from [(1, 1), (2, 0), (1, 1), (1, 1), (1, 1)] to [(0, 1), (2, 0), (0, 1), (0, 1), (1, 0)] according to the packet receiving state record [1, 0, 1, 1, 0].

When the timing of the second timer is ended (that is, the second predetermined duration has elapsed since the multicast state notification packet is sent), the sender 510 sequentially checks the state tags of the data packets in the packet sending state record, and when confirming that the state tags of all the data packets are (0, 1), ends the sending of the data block, and clears the cache of the data block on the sender. If a data packet whose state tag is not (0, 1) exists in the packet sending state record, the sender 510 performs the operation of sending the multicast data packet by using the QP with the first UD type in step ⑤ again to retransmit the data packet. Correspondingly, after a receiver receives the retransmitted data packet, if the data packet is not received before, the receiver performs receiving processing as described above, and accordingly updates a corresponding position in packet receiving state record of the receiver, while constructing the state response packet based on the updated packet receiving state records, and unicast replying to the sender 510 with the state response packet, such that the sender 510 can correspondingly update the packet sending state record; and if the data packet is correctly received before, the receiver deletes the repeated packet, and does not need to reply to the sender with the state response packet again.

Continuing with the previous examples to illustrate, by checking the packet sending state record [(0, 1), (2, 0), (0, 1), (0, 1), (1, 0)], the sender 510 can determine that the first, third, and fourth data packets are correctly received by all receivers, but the second data packet is not received by 2 receivers, and the fifth data packet is not received by 1 receiver, such that data packet multicast for retransmitting the second and fifth data packets is triggered.

Correspondingly, the receiver 530-2, after receiving multicast data packets of the retransmitted data packets, finds that the fifth data packet has been received, and therefore, the receiver 530-2 ignores the fifth data packet; the second data packet has not been received before, and therefore, the receiver 530-2 performs receiving processing, and updates the packet receiving state record from [1, 0, 1, 1, 1] to [1, 1, 1, 1, 1]. Then, the receiver 530-2 constructs a new state response packet based on the updated packet receiving state record, and unicast replies to the sender 510 with the new state response packet, such that the sender 510 can update the packet sending state record from [(0, 1), (2, 0), (0, 1), (0, 1), (1, 0)] to [(0, 1), (1, 0), (0, 1), (0, 1), (1, 0)] in response to the new state response packet. It should be noted that, the sender 510, when updating the packet sending state record based on the updated packet receiving state record [1, 1, 1, 1, 1], updates only the state tag which is not (0, 1) in the packet sending state record. This is because the state tag (0, 1) represents that corresponding data packet has been correctly received by all receivers, and no update is required.

In addition, the receiver 530-3, after receiving multicast data packets of the retransmitted data packets, finds that the second and fifth data packets have not been received before, and therefore, the receiver 530-3 performs receiving processing, and updates the packet receiving state record from [1, 0, 1, 1, 0] to [1, 1, 1, 1, 1]. Then, the receiver 530-3 constructs a new state response packet based on the updated packet receiving state record, and unicast replies to the sender 510 with the new state response packet, such that the sender 510 can update the packet sending state record from [(0, 1), (1, 0), (0, 1), (0, 1), (1, 0)] to [(0, 1), (0, 1), (0, 1), (0, 1), (0, 1)] in response to the new state response packet. Similarly, the sender 510, when updating the packet sending state record, updates only the state tag which is not (0, 1) in the packet sending state record.

So far, the sender 510, according to the packet sending state record [(0, 1), (0, 1), (0, 1), (0, 1), (0, 1)], may confirm that 5 data packets belonging to the same data block are correctly received by all receivers, and therefore, end the multicast sending process of the data block, and start a multicast sending process of a next data block. For example, the sender 510 may return to perform the operation in step ⑤ until all to-be-sent data involved in the multicast information notification packet in step ② is completely sent and is correctly received by all receivers.

Finally, with reference to FIG. 5B and FIG. 5B (continued), it can be known that, according to the network RDMA multicast solution suitable for distributed collective communication in the embodiments of the present disclosure, in the data multicast stage, the sender sends the multicast data packet carrying the virtual endpoint ID of the sender and the multicast group ID through the QP with the first UD type, so as to complete the duplication and distribution of the multicast packet by using the network switch, which avoids the repeated sending of same data, and not only saves the bandwidth from the sender to the network switch, but also effectively reduce the transmission latency. In addition, in the information notification stage, through information synchronization such as to-be-transmitted data is divided into a plurality of data blocks, and each data block is further divided into a plurality of data packets, and in the packet receiving acknowledgement stage, data packet transmission acknowledgement is performed by taking the data block as a unit based on the packet sending state record and the packet receiving state records that are updated in real time in the data multicast stage, which not only notably reduces a number of packets received with acknowledgement, but also avoids a waiting feedback time due to real-time feedback of packet loss information, effectively improving the efficiency of distributed collective communication.

Based on the detailed introduction of the above specific examples, according to the embodiments of the present disclosure, a multicast method based on RDMA is provided, which may be applied to a sender in distributed collective communication. As shown in FIG. 8, the multicast method may include step S810 to step S820. At step S810, a multicast packet is sent based on a QP with a first UD type, where the multicast packet carries a first virtual endpoint ID and a first multicast group ID, such that the multicast packet is forwarded to N receivers in the distributed collective communication through a multicast function of a network switch, N is an integer greater than or equal to 2, and each receiver, after determining that the first multicast group ID carried in the multicast packet is the same as a second multicast group ID of the receiver, and based on the first virtual endpoint ID, identifying that the multicast packet is from the sender, processes the multicast packet. And at step S820, when a unicast packet from the receiver is received based on a QP with a second UD type, after determining that the second multicast group ID carried in the unicast packet is the same as the first multicast group ID, and based on a second virtual endpoint ID carried in the unicast packet, identifying that the unicast packet is from the receiver, the unicast packet is processed.

In some embodiments, as shown in FIG. 8, before step S810, the method further includes: pre-creating the QP with the first UD type and the QP with the second UD type on the sender (step S810p1); and pre-generating the first multicast group ID and the first virtual endpoint ID on the sender (step S810p2).

In some embodiments, step S810p2 includes: randomly generating the first virtual endpoint ID; generating the first multicast group ID based on a predetermined rule according to a multicast IP address; and sending the multicast IP address to each receiver, such that each receiver generates the second multicast group ID based on the predetermined rule according to the multicast IP address. In this way, the first multicast group ID of the sender and the second multicast group ID of each receiver are completely same, and may be configured to identify packets in a multicast group constructed by the sender and all the receivers. In addition, the first virtual endpoint ID of the sender and the second virtual endpoint ID of each receiver are different from each other, and may be configured to identify specific sources of packets in the multicast group.

In some embodiments, with reference to FIG. 5B, before sending a multicast data packet that carries a data packet tag and a to-be-sent data packet based on the QP with the first UD type (step ⑤), the method further includes: sending a multicast information notification packet based on the QP with the first UD type (step ②), where the multicast information notification packet carries an information notification tag and data information related to to-be-transmitted data, the data information includes a data amount $M$ of the to-be-transmitted data, the to-be-transmitted data being divided into $K$ data blocks, each data block being further divided into s data packets, and a sequence number of each data packet, $K$ is an integer greater than or equal to 1, and s is an integer greater than or equal to 1; and receiving information notification acknowledgement packets returned by the $N$ receivers based on the QP with the second UD type (step ③), where each information notification acknowledgement packet carries an acknowledgement tag indicating that the receiver receives the multicast information notification packet.

Further, as described above, in order to restrict the waiting time for receiving N information notification acknowledgement packets, with reference to FIG. 5B, receiving the information notification acknowledgement packets returned by the $N$ receivers based on the QP with the second UD type may include: determining whether a number of the received information notification acknowledgement packets is less than $N$ at an end of timing of a first predetermined duration (step ④), where the first predetermined duration is calculated from a moment at which the multicast information notification packet is sent; and if a result of the determination is yes, resending the multicast information notification packet, and restarting the timing of the first predetermined duration to return to the determination step ④.

In addition, by maintaining and updating packet receiving state record on each receiver, the sender may perform batch packet receiving acknowledgement by taking the data block as a unit based on the packet sending state record of the sender and the packet receiving state record on each receiver. In some embodiments, with reference to FIG. 5B (continued), for each of the K data blocks, after all to-be-sent data packets included in the data block are sent, the method further includes: sending a multicast state notification packet for the data block based on the QP with the first UD type, where the multicast state notification packet carries a state notification tag (step ⑦); receiving state response packets based on the QP with the second UD type, where the state response packets each carries a packet receiving state record of the receiver (step ⑧); and based on a sending record of each data packet in the data block and the packet receiving state records in the received state response packets, determining whether the N receivers receive the sent data packets in the data block (step ⑨).

In some embodiments, based on the sending record of each data packet in the data block and the packet receiving state records in the received state response packets, determining whether the $N$ receivers receive the sent data packets in the data block may include: based on the sending record of each data packet in the data block and the packet receiving state records carried in the state response packets received within the second predetermined duration, determining whether each sent data packet in the data block is received by all the *N* receivers, where the second predetermined duration is calculated from a moment at which the multicast state notification packet is sent; if determining that there is a data packet that is not received by all the *N* receivers, based on the QP with the first UD type, sending a multicast data packet carrying the data packet, and restarting the timing of the second predetermined duration; and returning to the determination processing until determining that all the data packets included in the data block have been received by the *N* receivers.

Further, as described above, in order to restrict the waiting time for receiving the state response packet, as shown in FIG. 5B (continued), if no state response packet is received when the timing of the second predetermined duration is ended, the method further includes: resending the multicast state notification packet, and restarting the timing of the second predetermined duration.

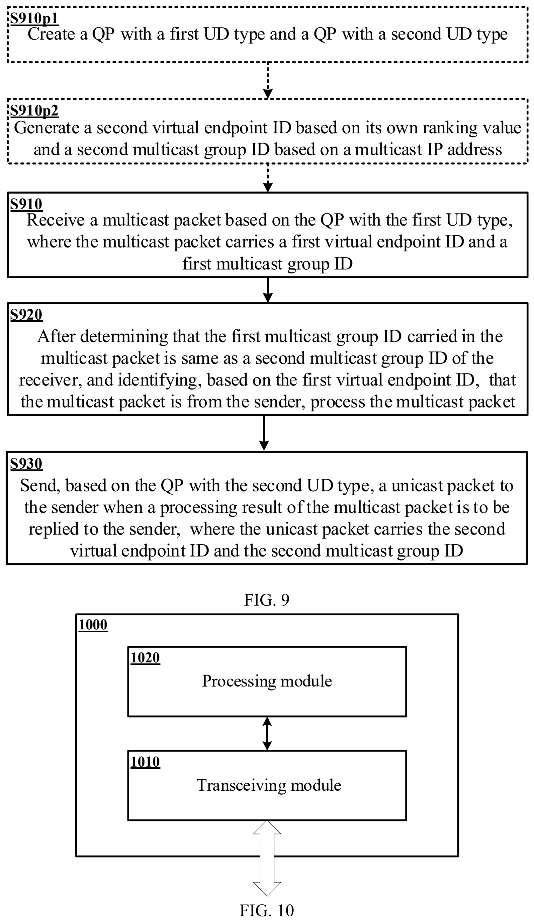

Correspondingly, according to an embodiment of the present disclosure, a multicast method based on RDMA is provided, which may be applied to one of N receivers in distributed collective communication. As shown in FIG. 9, the multicast method may include step S910 to S930. At step S910, a multicast packet is received based on the QP with the first UD type, where the multicast packet carries a first virtual endpoint ID of a sender and a first multicast group ID in the distributed collective communication. At step S920, after determining that the first multicast group ID carried in the multicast packet is the same as a second multicast group ID of the receiver, and identifying, based on the first virtual endpoint ID, that the multicast packet is from the sender, the multicast packet is processed. And at step S930, when a processing result of the multicast packet is to be replied to the sender, a unicast packet is sent to the sender based on the QP with the second UD type, where the unicast packet carries a second virtual endpoint ID and the second multicast group ID.

In some embodiments, as shown in FIG. 9, before step S910, the method further includes: pre-creating the QP with the first UD type and the QP with the second UD type on the receiver (step S910p1); and pre-generating the second multicast group ID and the second virtual endpoint ID on the receiver (step S910p2).

In some embodiments, step S910p2 includes: generating the second virtual endpoint ID based on a predetermined rule according to a ranking value of the receiver; and receiving a multicast IP address from the sender, and according to the multicast IP address, generating the second multicast group ID based on a rule that is same as that for generating the first multicast group ID by the sender. In this way, the first multicast group ID of the sender and the second multicast group ID of each receiver are completely same, and may be configured to identify packets in a multicast group constructed by the sender and all the receivers. In addition, the first virtual endpoint ID of the sender and the second virtual endpoint ID of each receiver are different from each other, and may be configured to identify specific sources of the packets in the multicast group.

In some embodiments, with reference to FIG. 5B, before receiving a multicast data packet that carries a data packet tag and a to-be-sent data packet based on the QP with the first UD type (step ⑤), the method further includes: receiving a multicast information notification packet based on the QP with the first UD type (step ②), where the multicast information notification packet carries an information notification tag and data information related to to-be-transmitted data, the data information includes a data amount *M* of the to-be-transmitted data, the to-be-transmitted data being divided into *K* data blocks, each data block being further divided into s data packets, and a sequence number of each data packet, *K* is an integer greater than or equal to 1, and s is an integer greater than or equal to 1; and sending an information notification acknowledgement packet to the sender based on the QP with the second UD type (step ③), where the information notification acknowledgement packet carries an acknowledgement tag indicating that the receiver receives the multicast information notification packet.

As shown in FIG. 5B, processing the multicast information notification packet may include: establishing a packet receiving state record according to the information notification tag and the data information carried in the multicast information notification packet (step ③), where the packet receiving state record includes a state tag corresponding to each data packet, and the state tag is recorded at a position corresponding to a sequence number of the data packet. In addition, processing the multicast data packet may include: receiving a data packet carried in the multicast data packet according to a data packet tag carried in the multicast data packet, and updating the state tag corresponding to the data packet in the packet receiving state record of the receiver (step ⑥).

By maintaining and updating the packet receiving state record on each receiver, the sender can perform batch packet receiving acknowledgement by taking the data block as a unit based on the packet sending state record of the sender and the packet receiving state record on each receiver. In some embodiments, as shown in FIG. 5B (continued), after receiving the multicast data packet based on the QP with the first UD type (step ⑥), the method may further include: receiving a multicast state notification packet based on the QP with the first UD type, where the multicast state notification packet carries a state notification tag (step (7)); and generating a state response packet according to the multicast state notification packet, and sending the state response packet to the sender based on the QP with the second UD type (step ⑧, where the state response packet carries the packet receiving state record of the receiver.

The above are one or more implementation methods of the present disclosure. Based on the same idea, the present disclosure further provides a corresponding node device for distributed collective communication. Referring to FIG. 4, the node device mainly includes, for example, a CPU, a GPU processor, or a network card capable of supporting RDMA.

In some embodiments, when the node device serves as a sender 410 in the distributed collective communication, the processor is configured to: send a multicast packet through the network card based on a QP with a first UD type, where the multicast packet carries a first virtual endpoint ID and a first multicast group ID, such that the multicast packet is forwarded to N receivers in the distributed collective communication through a multicast function of a network switch, N is an integer greater than or equal to 2, and each receiver, after determining that the first multicast group ID carried in the multicast data packet is the same as a second multicast group ID of the receiver, and based on the first virtual endpoint ID, identifying that the multicast packet is from the sender, processes the multicast packet; and when a unicast packet from the receiver is received through the network card based on a QP with a second UD type, after determining that the second multicast group ID carried in the unicast packet is the same as the first multicast group ID, and based on a second virtual endpoint ID carried in the unicast packet, identifying that the unicast packet is from the receiver, process the unicast packet.

In addition, when the node device serves as one of receivers 430-1, 430-2, ..., 430-N in the distributed collective communication, the processor is configured to: receive a multicast packet through the network card based on the QP with the first UD type, where the multicast packet carries a first virtual endpoint ID of a sender and a first multicast group ID in the distributed collective communication; after determining that the first multicast group ID carried in the multicast packet is the same as a second multicast group ID of the receiver, and based on the first virtual endpoint ID, identifying that the multicast packet is from the sender, process the multicast packet; and when replying to the sender with a processing result of the multicast packet, send a unicast packet to the sender through the network card based on the QP with the second UD type, where the unicast packet carries a second virtual endpoint ID and the second multicast group ID, such that the sender, after determining that the second multicast group ID carried in the unicast packet is the same as the first multicast group ID, and based on the second virtual endpoint ID, identifying that the unicast packet is from the receiver, processes the unicast packet.

According to the embodiments of the present disclosure, another node device for distributed collective communication is further provided. As shown in FIG. 10, the node device 1000 mainly includes a transceiving module 1010 and a processing module 1020.

In some embodiments, when the node device 1000 serves as a sender 410 in the distributed collective communication, the processing module 1020 is configured to: send a multicast packet through the transceiving module 1010 based on a QP with a first UD type, where the multicast packet carries a first virtual endpoint ID and a first multicast group ID, such that the multicast packet is forwarded to $N$ receivers in the distributed collective communication through a multicast function of a network switch, $N$ is an integer greater than or equal to 2, and each receiver, after determining that the first multicast group ID carried in the multicast data packet is the same as a second multicast group ID of the receiver, and based on the first virtual endpoint ID, identifying that the multicast packet is from the sender, processes the multicast packet; and when a unicast packet from the receiver is received through the transceiving module 1010 based on a QP with a second UD type, after determining that the second multicast group ID carried in the unicast packet is the same as the first multicast group ID, and based on a second virtual endpoint ID carried in the unicast packet, identifying that the unicast packet is from the receiver, process the unicast packet.

In addition, when the node device 1000 serves as one of receivers 430-1, 430-2, ..., 430-N in the distributed collective communication, the processing module 1020 is configured to: receive a multicast packet through the transceiving module 1010 based on the QP with the first UD type, where the multicast packet carries a first virtual endpoint ID of a sender and a first multicast group ID in the distributed collective communication; after determining that the first multicast group ID carried in the multicast packet is the same as a second multicast group ID of the receiver, and based on the first virtual endpoint ID, identifying that the multicast packet is from the sender, process the multicast packet; and when replying to the sender with a processing result of the multicast packet, send a unicast packet to the sender through the transceiving module 1010 based on the QP with the second UD type, where the unicast packet carries a second virtual endpoint ID and the second multicast group ID, such that the sender, after determining that the second multicast group ID carried in the unicast packet is the same as the first multicast group ID, and based on the second virtual endpoint ID, identifying that the unicast packet is from the receiver, processes the unicast packet.

Exemplarily, the node device shown in FIG. 4 and FIG. 10 may be a terminal device such as a desktop computer or a notebook computer, or be a server or other dedicated device. Each module shown in FIG. 10 may be a module implemented by hardware, or be a module implemented by a software program, or implement its function by software and hardware that cooperate with each other. These modules are only a logical function division, and may be completely or partially integrated into one physical entity in actual implementation, or be physically separated. In addition, all the modules may be implemented in a form of calling software by using a processing element, or be implemented in a form of hardware; or some modules may be implemented in a form of calling software by using a processing element, and some modules are implemented in a form of hardware. For example, a determining module may be a separately set processing element, or be integrated into a chip of the apparatus for implementation, or be stored in a memory of the apparatus in a form of program code, and the function of the determining module is called and executed by a processing element of the apparatus. Other modules are implemented similarly. In addition, these modules may be completely or partially integrated together, or be separately implemented. The processing element described herein may be an integrated circuit having signal processing capabilities. In an implementation process, each step or each module in the method may be completed by using an integrated logic circuit of hardware in a processor element or an instruction in a form of software.

For example, these modules may be one or more integrated circuits configured to implement the method, for example, one or more application specific integrated circuits (ASIC), or one or more digital signal processors (DSP), or one or more field programmable gate arrays (FPGA). For another example, when a module is implemented in a form of scheduling program code by using a processing element, the processing element may be a general-purpose processor, for example, a central processing unit (CPU) or other processor that can call program code. For another example, these modules may be integrated together and be implemented in a form of a system-on-a-chip (SOC).

The above examples may be implemented in whole or in part by software, hardware, firmware or any combination thereof, and when being implemented by the software, they may be implemented in the form of a computer program product in whole or in part. The computer program product includes one or more computer instructions. When the computer program instructions are loaded and executed on a computer, procedures or functions according to the examples of the present application are generated in whole or in part. The computer may be a general-purpose computer, a special-purpose computer, a computer network or other programmable apparatuses. Computer instructions may be stored in a computer readable storage medium, or be transmitted from a computer readable storage medium to another computer readable storage medium. For example, the computer instructions may be transmitted from a website, computer, server or data center to another website, computer, server or data center in a wired manner (such as a coaxial cable, an optical fiber and a digital subscriber line (DSL)), or in a wireless manner (such as infrared, radio and microwave). The computer readable storage medium may be any available medium that may be accessed by a computer or a data storage device such as a server and a data center integrated with one or more available media. The available medium may be a magnetic medium (such as a floppy disk, a hard disk and a magnetic tape), an optical medium (such as DVD), a semiconductor medium (such as a solid state disk (SSD)), etc.

The present disclosure further provides a computer readable storage medium, having a computer program stored thereon, where the computer program may be configured to execute the multicast method based on RDMA provided in FIG. 8 or FIG. 9. The storage medium may be a non-volatile storage medium.

In addition, on a hardware level, the node device shown in FIG. 4 may include a memory and a non-volatile memory in addition to a processor and a network card, and of course, may further include hardware required by other service, such as an internal bus. The processor reads a corresponding computer program from the non-volatile memory into the memory and then runs the computer program, to implement the multicast method based on RDMA described in FIG. 8 or FIG. 9.

In addition to the software implementation manner, other implementation manner, such as a logic device or a combination of software and hardware, is not excluded in the present disclosure, that is, an execution body of the following processes is not limited to each logic unit, and may be hardware or a logic device.

It shall be noted that the term "including", "containing" or any other variation thereof is intended to encompass non-exclusive inclusion, such that a process, method, article or device including a series of elements includes not only those elements but also other elements not listed explicitly or those elements inherent to such a process, method, article or device. Without more limitations, an element defined by the statement "including a..." shall not be precluded to include additional same elements present in a process, method, article or device including the elements.

Various examples in the present disclosure are described in a progressive manner. Same or similar parts in the various examples may be referred to for each other, and each example focuses on the differences from other examples. Especially, for system examples, since they are basically similar to the method examples, the description is simplified, and reference may be made to some of the description of the method examples.

The above are only the embodiments of the present disclosure, which are not intended to limit the present disclosure. For those skilled in the art, the present disclosure may have various modifications and variations. Any modifications, equivalent substitutions, improvements, etc. made within the spirit and principle of the present disclosure shall fall within the scope of the claims of the present disclosure.

**Claims**

1. A multicast method based on Remote Direct Memory Access RDMA, applied to a sender in distributed collective communication, wherein the method comprises:

    sending, based on a Queue Pair, QP, with a first Unreliable Datagram, UD, type, a multicast packet, wherein the multicast packet carries a first virtual endpoint identifier ID and a first multicast group ID, such that the multicast packet is forwarded to N receivers in the distributed collective communication through a multicast function of a network switch, *N* is an integer greater than or equal to 2, and each receiver, after determining that the first multicast group ID carried in the multicast packet is same as a second multicast group ID of the receiver, and based on the first virtual endpoint ID, identifying that the multicast packet is from the sender, processes the multicast packet; and

in response to a determination that a unicast packet from the receiver is received based on a QP with a second UD type, a determination that a second multicast group ID carried in the unicast packet is same as the first multicast group ID, and that the unicast packet is identified, based on a second virtual endpoint ID carried in the unicast packet, as being sent from the receiver, processing the unicast packet.

2.  The method according to claim 1, wherein before sending the multicast packet based on the QP with the first UD type, the method further comprises:

    generating a multicast Internet Protocol IP address,
    generating the first multicast group ID based on a predetermined rule according to the multicast IP address, and
    sending the multicast IP address to each receiver, such that each of the *N* receiver generates the second multicast group ID based on the predetermined rule according to the multicast IP address.

3.  The method according to claim 1 or 2, wherein before sending the multicast packet based on the QP with the first UD type, the method further comprises:
    randomly generating the first virtual endpoint ID.

4.  The method according to any one of claims 1 to 3, wherein sending the multicast packet based on the QP with the first UD type comprises:
    sending a multicast data packet based on the QP with the first UD type, wherein the multicast data packet carries a data packet tag and a to-be-sent data packet.

5.  The method according to claim 4, wherein before sending the multicast data packet based on the QP with the first UD type, the method further comprises:

    sending, based on the QP with the first UD type, a multicast information notification packet, wherein the multicast information notification packet carries an information notification tag and data information related to to-be-transmitted data; wherein the data information comprises a data amount *M* of the to-be-transmitted data, the to-be-transmitted data being divided into *K* data blocks, each data block being further divided into s data packets, and a sequence number of each data packet, and wherein *K* is an integer greater than or equal to 1, and s is an integer greater than or equal to 1; and
    receiving, based on the QP with the second UD type, information notification acknowledgement packets returned by the *N* receivers, wherein each information notification acknowledgement packet carries an acknowledgement tag indicating that the receiver receives the multicast information notification packet.

6.  The method according to claim 5, wherein receiving, based on the QP with the second UD type, the information notification acknowledgement packets returned by the N receivers comprises:

    determining whether a number of the received information notification acknowledgement packets is less than *N* at an end of timing of a first predetermined duration, wherein the first predetermined duration is calculated from a moment at which the multicast information notification packet is sent; and
    in response to determining that a result of the determination on the number is yes, resending the multicast information notification packet, and restarting the timing of the first predetermined duration to return to a step of determining whether the number of the received information notification acknowledgement packets is less than *N*.

7.  The method according to claim 5 or 6, wherein sending, based on the QP with the first UD type, the multicast data packet comprises:
    for each to-be-sent data packet comprised in each of the *K* data blocks, sending, based on the QP with the first UD type, a multicast data packet carrying the data packet.

8.  The method according to claim 7, wherein for each of the *K* data blocks, after sending all to-be-sent data packets comprised in the data block, the method further comprises:

sending, based on the QP with the first UD type, a multicast state notification packet for the data block, wherein the multicast state notification packet carries a state notification tag;

receiving, based on the QP with the second UD type, state response packets, wherein the state response packets each carries a packet receiving state record of the receiver; and

based on a sending record of each data packet in the data block and the packet receiving state records in the received state response packets, determining whether the N receivers receive the sent data packets in the data block.

9. The method according to claim 8, wherein based on the sending record of each data packet in the data block and the packet receiving state records in the received state response packets, determining whether the *N* receivers receive the sent data packets in the data block comprises:

based on the sending record of each data packet in the data block and the packet receiving state records carried in the state response packets received within a second predetermined duration, determining whether each sent data packet in the data block is received by all the *N* receivers, wherein the second predetermined duration is calculated from a moment at which the multicast state notification packet is sent;

in response to determining that there is a data packet that is not received by all the *N* receivers, sending, based on the QP with the first UD type, a multicast data packet carrying the data packet, and restarting timing of the second predetermined duration; and

returning to a process of, based on the packet receiving state records carried in the received state response packets, determining whether the sent data packet is received by all the *N* receivers until determining that all data packets comprised in the data block have been received by the *N* receivers.

10. The method according to claim 9, wherein in response to determining that no state response packet has been received by the end of the second predetermined duration, the method further comprises:

resending the multicast state notification packet, and
restarting the timing of the second predetermined duration.

11. A multicast method based on Remote Direct Memory Access RDMA, applied to one of N receivers in distributed collective communication, wherein N is an integer greater than or equal to 2, and wherein the method comprises:

receiving, based on a Queue Pair, QP, with a first Unreliable Datagram, UD, type, a multicast packet, wherein the multicast packet carries a first virtual endpoint ID of a sender and a first multicast group ID in the distributed collective communication;

after determining that the first multicast group ID carried in the multicast packet is same as a second multicast group ID of the receiver, and identifying, based on the first virtual endpoint ID, that the multicast packet is from the sender, processing the multicast packet; and

sending, based on a QP with a second UD type, a unicast packet to the sender when a processing result of the multicast packet is to be replied to the sender, wherein the unicast packet carries a second virtual endpoint ID and the second multicast group ID, such that the sender, after determining that the second multicast group ID carried in the unicast packet is same as the first multicast group ID, and based on the second virtual endpoint ID, identifying that the unicast packet is from the receiver, processes the unicast packet.

12. The method according to claim 11, wherein before receiving the multicast packet based on the QP with the first UD type, the method further comprises:

receiving a multicast Internet Protocol IP address from the sender;
according to the multicast IP address, generating the second multicast group ID based on a rule that is same as that for generating the first multicast group ID by the sender.

13. The method according to claim 11 or 12, wherein before receiving, based on the QP with the first UD type, the multicast packet, the method further comprises:
generating the second virtual endpoint ID based on a predetermined rule according to a ranking value of the receiver.

14. The method according to any one of claims 11 to 13, wherein receiving, based on the QP with the first UD type, the multicast packet comprises:
receiving a multicast data packet based on the QP with the first UD type, wherein the multicast data packet carries a data packet tag and a to-be-sent data packet.

15. The method according to claim 14, wherein before receiving, based on the QP with the first UD type, the multicast packet, the method further comprises:

receiving, based on the QP with the first UD type, a multicast information notification packet, wherein the multicast information notification packet carries an information notification tag and data information related to to-be-transmitted data; wherein the data information comprises a data amount $M$ of the to-be-transmitted data, the to-be-transmitted data being divided into $K$ data blocks, each data block being further divided into $s$ data packets, and a sequence number of each data packet, and wherein $K$ is an integer greater than or equal to 1, and $s$ is an integer greater than or equal to 1; and

sending an information notification acknowledgement packet to the sender based on the QP with the second UD type, wherein the information notification acknowledgement packet carries an acknowledgement tag indicating that the receiver receives the multicast information notification packet.

16. The method according to claim 15, wherein

processing the multicast information notification packet comprises: establishing, according to the information notification tag and the data information carried in the multicast information notification packet, a packet receiving state record, wherein the packet receiving state record comprises a state tag corresponding to each data packet, and the state tag is recorded at a position corresponding to a sequence number of the data packet;

processing the multicast data packet comprises: receiving, according to the data packet tag carried in the multicast data packet, the data packet carried in the multicast data packet, and updating the state tag corresponding to the data packet in the packet receiving state record of the receiver.

17. The method according to claim 16, wherein after receiving, based on the QP with the first UD type, the multicast data packet, the method further comprises:

receiving, based on the QP with the first UD type, a multicast state notification packet, wherein the multicast state notification packet carries a state notification tag;

generating, according to the multicast state notification packet, a state response packet, wherein the state response packet carries the packet receiving state record of the receiver; and

sending, based on the QP with the second UD type, the state response packet to the sender.

18. A node device for distributed collective communication, serving as a sender in the distributed collective communication, and comprising a processor and a network card supporting Remote Direct Memory Access RDMA, wherein the processor is configured to:

send based on a Queue Pair, QP, with a first Unreliable Datagram, UD, type, a multicast packet, wherein the multicast packet carries a first virtual endpoint identifier ID and a first multicast group ID, such that the multicast packet is forwarded to $N$ receivers in the distributed collective communication through a multicast function of a network switch, $N$ is an integer greater than or equal to 2, and each receiver, after determining that the first multicast group ID carried in the multicast packet is same as a second multicast group ID of the receiver, and based on the first virtual endpoint ID, identifying that the multicast packet is from the sender, processes the multicast packet; and

in response to a determination that a unicast packet from the receiver is received based on a QP with a second UD type, a determination that a second multicast group ID carried in the unicast packet is same as the first multicast group ID, and that the unicast packet is identified, based on a second virtual endpoint ID carried in the unicast packet, as being sent from the receiver, process the unicast packet.

19. A node device for distributed collective communication, serving as one of N receivers in the distributed collective communication, and comprising a processor and a network card supporting Remote Direct Memory Access RDMA, wherein the processor is configured to:

receive, based on a Queue Pair, QP, with a first Unreliable Datagram, UD, type, a multicast packet, wherein the multicast packet carries a first virtual endpoint ID of a sender and a first multicast group ID in the distributed collective communication;

after determining that the first multicast group ID carried in the multicast packet is same as a second multicast group ID of the receiver, and identifying, based on the first virtual endpoint ID, that the multicast packet is from the sender, process the multicast packet; and

send, based on a QP with a second UD type, a unicast packet to the sender when a processing result of the multicast packet is to be replied to the sender, wherein the unicast packet carries a second virtual endpoint ID and the second multicast group ID, such that the sender, after determining that the second multicast group ID carried in the unicast packet is same as the first multicast group ID, and based on the second virtual endpoint ID, identifying that the unicast packet is from the receiver, processes the unicast packet.

FIG. 1

FIG. 2

AI training/HPC

OpenMPI

UCX

GPU/CPU

RDMA network card

FIG. 3A

AI training

NCCL

ncclNet plug-in

UCX

NVIDIA GPU

RDMA network card

FIG. 3B

430-1

Network card CPU/GPU

410

CPU/GPU Network card

420

Eth Network

430-2

Network card CPU/GPU

......

430-N

Network card CPU/GPU

FIG. 4

Sender 510 | Receiver 530-1 | ... | Receiver 530-N

**Establish multicast connection**

① Sender creates QPs with two UD types of RDMA, one of QPs is configured to construct a multicast group

setup_mcast_group &&
join_mcast_group

join_mcast_group

② Each receiver creates QPs with two UD types of RDMA, one of the QP is configured to join a multicast group

join_mcast_group

③ Sender generates a multicast IP

④ Sender and all the receivers participating the multicast generate same multicast group ID grouped based on a certain rule according to the multicast IP

groupid          groupid

**Establish virtual unicast links**

⑤ Sender randomly generates a virtual endpoint ID v_epid_0_0,
all receivers generate virtual endpoint ID v_epid_i_0 based on the certain rule according to ranking values

v_epid_1_0     ...     v_epid_N_0

⑥ Sender sends the CREQ packet carrying information such as v_epid_0_0, QPN, and etc, in a multicast manner

⑦ Each receiver reply CREP packets carrying information such as v_epid_i_0、 QPN and etc, in a unicast manner

⑧ Sender replies confirming ACK packets in a multicast manner

FIG. 5A

FIG. 5B

FIG. 5B（continued）

| Data block 1 | — — — | (N, pkt1) | (N, pkt2) | (N, pkt3) | ⋯ | (N, pkts) |
| Data block 2 | | | | | | |
| Data block 3 | | | | ⋮ | | |
| ⋮ | | | | | | |
| Data block K | — — — | (N, pkt1) | (N, pkt2) | (N, pkt3) | ⋯ | (N, pkts) |

send_pkt_map

FIG. 6

| Data block 1 | — — — | pkt1 | pkt2 | pkt3 | ⋯ | pkts |
| Data block 2 | | | | | | |
| Data block 3 | | | | ⋮ | | |
| ⋮ | | | | | | |
| Data block K | — — — | pkt1 | pkt2 | pkt3 | ⋯ | pkts |

recv_pkt_map

FIG. 7

**S810p1**
Create a QP with a first UD type and a QP with a second UD type

**S810p2**
Generate a first multicast group ID according to a multicast IP address and a first virtual endpoint ID

**S810**
Send a multicast packet based on the QP with the first UD type, where the multicast packet carries the first virtual endpoint ID and the first multicast group ID

**S820**
When a unicast packet from the receiver is received based on the QP with the second UD type, after determining that the second multicast group ID carried in the unicast packet is same as the first multicast group ID, and based on a second virtual endpoint ID carried in the unicast packet, identifying that the unicast packet is from the receiver, process the unicast packet

FIG. 8

**S910p1**
    Create a QP with a first UD type and a QP with a second UD type

**S910p2**
Generate a second virtual endpoint ID based on its own ranking value and a second multicast group ID based on a multicast IP address

**S910**
    Receive a multicast packet based on the QP with the first UD type, where the multicast packet carries a first virtual endpoint ID and a first multicast group ID

**S920**
    After determining that the first multicast group ID carried in the multicast packet is same as a second multicast group ID of the receiver, and identifying, based on the first virtual endpoint ID, that the multicast packet is from the sender, process the multicast packet

**S930**
Send, based on the QP with the second UD type, a unicast packet to the sender when a processing result of the multicast packet is to be replied to the sender, where the unicast packet carries the second virtual endpoint ID and the second multicast group ID

FIG. 9

**1000**

**1020**
Processing module

**1010**
Transceiving module

FIG. 10

## INTERNATIONAL SEARCH REPORT

| | International application No. |
|---|---|
| | **PCT/CN2024/084592** |

| A. | CLASSIFICATION OF SUBJECT MATTER |
|---|---|

H04L 12/18(2006.01)i

According to International Patent Classification (IPC) or to both national classification and IPC

| B. | FIELDS SEARCHED |
|---|---|

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT, CNKI, 3GPP: RDMA, 远程直接数据存取, 远程直接内存访问, 组播, 多播, 广播, 比对, 对比, 比较, 匹配, 不可靠数据, UD, 队列对, QP, remote direct data access, multicast, broadcast, unreliable data, queue, pair, compare, match.

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 112448826 A (HUNDSUN TECHNOLOGIES INC.) 05 March 2021 (2021-03-05) description, paragraphs [0086]-[0207] | 1-19 |
| A | CN 115442318 A (HUAWEI TECHNOLOGIES CO., LTD.) 06 December 2022 (2022-12-06) description, paragraphs [0053]-[0118] | 1-19 |
| A | CN 114944966 A (CHINA SOUTHERN POWER GRID SHENZHEN DIGITAL GRID RESEARCH INSTITUTE CO., LTD.) 26 August 2022 (2022-08-26) description, paragraphs [0076]-[0161] | 1-19 |
| A | US 2009077268 A1 (IBM) 19 March 2009 (2009-03-19) description, paragraphs [0030]-[0091] | 1-19 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 September 2024** | **22 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/084592**

| Patent document cited in search report | | | Publication date (day/month/year) | Patent family member(s) | | | Publication date (day/month/year) |
|---|---|---|---|---|---|---|---|
| CN | 112448826 | A | 05 March 2021 | CN | 112448826 | B | 15 April 2022 |
| CN | 115442318 | A | 06 December 2022 | None | | | |
| CN | 114944966 | A | 26 August 2022 | CN | 114944966 | B | 19 April 2024 |
| US | 2009077268 | A1 | 19 March 2009 | None | | | |

Form PCT/ISA/210 (patent family annex) (July 2022)